# EUROPÄISCHE PATENTSCHRIFT

(11) **EP 2 630 031 B1**
(45) Veröffentlichungstag und Bekanntmachung des Hinweises auf die Patenterteilung: **29.06.2016**
(21) Anmeldenummer: 11773654.6
(22) Anmeldetag: 13.10.2011
(51) Int. Cl.: B64C 1/10, B64C 1/20

(54) **DEKOMPRESSIONSEINHEIT**
DECOMPRESSION UNIT
UNITÉ DE DÉCOMPRESSION

(30) Priorität: 19.10.2010 AT 17382010
(43) Veröffentlichungstag der Anmeldung: 28.08.2013
(73) Patentinhaber: FACC AG, 4910 Ried im Innkreis (AT)
(72) Erfinder: PAMMINGER, Erich, 4984 Weilbach (AT); KAMMERER, Bernhard, 4755 Zell an der Pram (AT)
(74) Vertreter: Sonn & Partner Patentanwälte
(86) Internationale Anmeldenummer: PCT/AT2011/000426
(87) Internationale Veröffentlichungsnummer: WO 2012/051634

(56) Entgegenhaltungen:
- EP-A2- 0 894 709
- WO-A2-2007/112147
- US-A- 3 332 175
- US-A- 5 461 831
- US-A1- 2009 159 748

## Beschreibung

Die Erfindung betrifft eine Dekompressionseinheit für den Einsatz in einer Dekompressionsöffnung eines Wandelements eines Luftfahrzeugs, mit einem über einen Rahmen in bzw. über der Dekompressionsöffnung befestigbaren Paneel, welches Paneel bei einem vorgegebenen Differenzdruck zur Freigabe der Dekompressionsöffnung aus dem Rahmen bewegbar ist, wobei das Paneel durch zumindest eine ausgehärtete Prepreglage mit zumindest einer durch ausgehärtetes Harz ausgefüllten Trennfuge als Sollbruchstelle gebildet ist, welche Trennfuge bei Überschreitung des vorgegebenen Differenzdrucks bricht.

Während des Fluges eines Luftfahrzeugs wird der Druck in der Kabine erhöht, um für die Passagiere und das Flugpersonal auch in den üblichen Flughöhen normale Umgebungsbedingungen zu schaffen. Dementsprechend ist der Innendruck eines Luftfahrzeugs gegenüber der Umgebung erhöht, weshalb die Kabine in Form einer Druckkabine ausgebildet ist. Zur Regelung des Drucks in der Kabine eines Luftfahrzeugs sind entsprechende Auslassventile vorgesehen.

Die meisten Luftfahrzeuge weisen mehrere Abschnitte auf, welche durch entsprechende Wandelemente unterteilt sind. Beispielsweise wird der Passagierraum eines Passagierflugzeuges entsprechend vom Frachtraum abgetrennt. Unter dem Begriff Wandelement sind dabei sowohl im Wesentlichen vertikal angeordnete Elemente, aber auch im Wesentlichen horizontal angeordnete Bodenelemente und Deckenelemente zu verstehen. In den Zwischenwänden zwischen derartigen Kabinen müssen so genannte Dekompressionseinheiten angeordnet sein, welche beim Überschreiten eines vorgegebenen Differenzdrucks zwischen den Räumen beiderseits des Wandelements öffnen und einen Druckausgleich ermöglichen. Beispielsweise kann es durch ein Loch in der Außenhaut des Luftfahrzeugs zu einem entsprechendem Unterdruck im Frachtraum kommen, durch welchen der Differenzdruck zwischen dem Passagierraum und dem Frachtraum auf einen unzulässig hohen Wert ansteigen und zur Zerstörung der Wandelemente führen könnte. Die Dekompressionspaneele lösen in einem solchem Fall aus und geben entsprechende Dekompressionsöffnungen in den Wandelementen frei, über die rasch ein Druckausgleich zwischen den Räumen vorgenommen werden kann. Derartige Dekompressionspaneele (Blow Out Panels) müssen bei der Überschreitung eines vorgegebenen Differenzdrucks innerhalb möglichst kurzer Zeit auslösen. Dekompressionspaneele für Luftfahrzeuge sind in verschiedensten Ausführungsformen bekannt.

Beispielsweise beschreibt die US 5 871 178 A ein Dekompressionspaneel, bei dem die Dekompressionsöffnungen über federnd gelagerte Paneele abgedeckt werden. Bei Überschreiten eines bestimmten Differenzdrucks wird die Federkraft der Befestigungselemente überwunden und das Paneel aus der Öffnung bewegt. Nachteilig dabei ist, dass die Federkraft, welche zu überwinden ist, nicht eindeutig definierbar ist.

Die EP 291 661 B1 beschreibt ein ähnliches Dekompressionspaneel für Zwischenwänden und/oder Zwischenböden von Luftfahrzeugen, welches über gleichmäßig verteilte Halte- und Klemmvorrichtungen in der Dekompressionsöffnung gehalten wird. Die Haltefedern sind mit Sollbruchstellen ausgestattet, welche bei der Überschreitung eines vorgegeben Differenzdrucks brechen. Auch diese Konstruktion ist relativ aufwändig ausgebildet und gewährleistet keine rasche Auslösezeit.

Die WO 2007/112147 A2 beschreibt eine Dekompressionseinheit der gegenständlichen Art, wobei eine Trennfuge, welche die Sollbruchstelle im Falle der Überschreitung eines vorgegebenen Differenzdrucks darstellt, im Wesentlichen U-förmig angeordnet ist.

Die Aufgabe der vorliegenden Erfindung besteht in der Schaffung einer oben genannten Dekompressionseinheit, welche möglichst einfach und kostengünstig aufgebaut ist, und welche bei der Überschreitung eines vorgegebenen Differenzdrucks möglichst rasch und zuverlässig auslöst. Nachteile bekannter Systeme sollen verhindert oder zumindest reduziert werden.

Gelöst wird die erfindungsgemäße Aufgabe dadurch, dass die Trennfuge durchgehend, in sich geschlossen ist, und an der, dem Wandelement zugewandten Seite des Paneels ein Brandschutzstreifen aus flammhemmendem Material angeordnet ist. Die erfindungsgemäße Dekompressionseinheit zeichnet sich durch eine besonders einfach und kostengünstig herstellbare Konstruktion aus und garantiert eine Auslösung in besonders kurzer Zeit. Dadurch, dass die Trennfuge durchgehend, in sich geschlossen ist, wird eine sichere Freigabe der Dekompressionsöffnung im Falle einer Differenzdrucküberschreitung gewährleistet. Durch entsprechende Wahl der Größe der Dekompressionsöffnung wird gewährleistet, dass die für den Druckausgleich notwendige Luftmenge in möglichst kurzer Zeit von einer Seite des Wandelements zur anderen Seite des Wandelements gelangen kann. Bei der Herstellung werden eine oder mehrere Prepreglagen im nicht ausgehärteten Zustand an einer frei definierbaren Kontur durchtrennt und danach in üblicher Weise im Autoklaven ausgehärtet. Dabei wird die hergestellte Trennfuge durch das im Prepreg enthaltene Harz automatisch ausgefüllt. Das ausgehärtete Harz in der Trennfuge bildet somit die Sollbruchstelle, welche bei Überschreitung des Differenzdrucks bricht. Durch entsprechende Wahl der Breite der Trennfuge und der Höhe der Trennfuge bzw. der Anzahl der Prepreglagen kann der Differenzdruck, bei welchem die Sollbruchstelle bricht, relativ genau und zuverlässig eingestellt werden. Dabei ist die Breite der Trennfuge in Bezug auf das Auslöseverfahren nicht besonders relevant; wichtig ist nur, dass bei der Herstellung der Trennfuge die Fasern der Prepreglage, insbesondere die Glasfasern einer Glasfaserprepreglage, durchtrennt werden. Der Verlauf der Trennfuge kann an die jeweiligen geometrischen Bedingungen angepasst werden. Die erfindungsgemäße Dekompressionseinheit zeichnet sich auch durch eine sehr geringe Masse des Paneels aus, was eine sehr schnelle Auslösezeit sicherstellt. Darüber hinaus kann die Dekompressionseinheit an der Sichtseite leicht an die übliche Innenausstattung einer Flugzeugkabine angepasst werden. Um zusätzlich auch die Brandschutzbestimmungen und auch die erforderliche Rauchdichtheit zu gewährleisten, ist an der, dem Wandelement zugewandten Seite des Paneels ein Brandschutzstreifen aus flammhemmendem Material angeordnet. Ein derartiger Brandschutzstreifen aus flammhemmendem Material kann zusätzlich oder anstelle des oben genannten Schaumstoffstreifens eingesetzt werden. Dabei ist ein so genanntes intumeszierendes Brandschutzlaminat auf Graphitbasis, wie es bereits bei Brandschutztüren eingesetzt wird, besonders geeignet. Beispielsweise ist ein solches Brandschutzlaminat unter der Markenbezeichnung Intumex^{®} L erhältlich.

Wenn an zumindest einer Seite der zumindest einen Prepreglage eine Kunststofffolie angeordnet ist, kann die Herstellung des Paneels erleichtert werden, da die Kunststofffolie als Trägermaterial dient und somit der Transport des Paneels in den Autoklaven zur Aushärtung vereinfacht wird. Darüber hinaus verleiht die Kunststofffolie dem Paneel eine optimale optische Erscheinung. Dabei hat sich insbesondere eine Polyvinylfluoridfolie, die beispielsweise unter dem Handelsnamen Tedlar^{®} der Firma DuPont erhältlich ist, besonders bewährt. Diese Polymerfolie wird bereits zur Beschichtung von Paneelen in Luftfahrzeugen eingesetzt und zeichnet sich durch eine besonders geringe Dicke und hohe Widerstandsfähigkeit aus.

Um die Dichtheit der Dekompressionseinheit im nicht ausgelösten Zustand zu gewährleisten, ist es von Vorteil, wenn an der, dem Wandelement zugewandten Seite des Paneels ein Streifen aus elastischem Material, insbesondere Schaumstoff, angeordnet ist. Dieser Schaumstoffstreifen dichtet die Dekompressionsöffnung entsprechend ab.

Zur Verbindung des Rahmens der Dekompressionseinheit mit dem Wandelement des Luftfahrzeuges können entsprechende Verbindungselemente vorgesehen sein.

Wenn die Verbindungselemente durch Schrauben, Bolzen oder dergl. gebildet sind, ist ein Austausch der Dekompressionseinheit relativ einfach möglich.

Wenn zusätzlich oder anstelle von Schrauben oder Bolzen der Rahmen der Dekompressionseinheit verklebt ist, kann ein Austausch der Dekompressionseinheit nicht oder nicht so leicht erfolgen.

Um zu verhindern, dass das Paneel oder Teile des Paneels im Falle einer Druckdifferenzüberschreitung unkontrolliert aus der Dekompressionsöffnung bewegt werden, kann zumindest ein Element zur Sicherung des Paneels vorgesehen sein. Ein solches Sicherungselement ist insbesondere bei einer in sich geschlossenen Trennfuge relevant, damit das Paneel im Falle des Auslösens der Dekompressionseinheit an dem Wandelement festgehalten wird.

Im einfachsten Fall können derartige Sicherungselemente durch Seile gebildet sein, welche zwischen dem Rahmen der Dekompressionseinheit oder dem Wandelement und dem Paneel angeordnet sind. Ein Ende des Seils kann beispielsweise mit dem Verbindungselementen am Rahmen verbunden werden, wohingegen das andere freie Ende des Seils am Paneel festgeklebt werden kann.

Um ein ungewolltes Brechen der Trennfuge des Paneels durch mechanische Einwirkung von einer Seite der Dekompressionseinheit zu verhindern, kann an dieser Seite des Paneels ein mit dem Rahmen verbindbares Schutzgitter angeordnet sein. Dieses Schutzgitter verhindert, dass beispielsweise mit der Hand oder einem Fuß das Paneel aus der Dekompressionsöffnung gedrückt wird und somit auch bei Unterschreitung des Differenzdrucks eine Freigabe der Dekompressionsöffnung stattfindet. Das Schutzgitter ist vorteilhafterweise auch durch ein aus zumindest einer Prepreglage gebildetes Gitter hergestellt.

Wenn die Trennfuge eine Breite von 0,1 bis 0,8 mm aufweist, ist die sichere Durchtrennung der Fasern der Prepreglage gewährleistet und eine einfache Herstellung der Trennfuge mit herkömmlichen Methoden möglich.

Die Erfindung wird anhand der beigefügten Figuren näher erläutert.

Darin zeigen:
Figur 1 die Ansicht auf ein Wandelement eines Luftfahrzeugs mit einer Dekompressionsöffnung und einer darin angeordneten Dekompressionseinheit gemäß der vorliegenden Erfindung;
Figur 2 eine Ansicht auf das Wandelement 3 gemäß Figur 1 von der anderen Seite;
Figur 3 ein Schnittbild durch das Wandelement 3 gemäß Figur 2 entlang der Schnittlinie III-III;
Figur 4a und 4b Schnittbilder durch zwei verschiedene Ausführungsformen eines Paneels einer erfindungsgemäßen Dekompressionseinheit;
Figur 5a bis 5c verschiedene Anordnungen einer Trennfuge im Paneel der Dekompressionseinheit (die nicht Teil der Erfindung sind) ; und
Figur 6 eine weitere Ausführungsform einer Dekompressioneinheit mit einem daran angeordneten Schutzgitter.

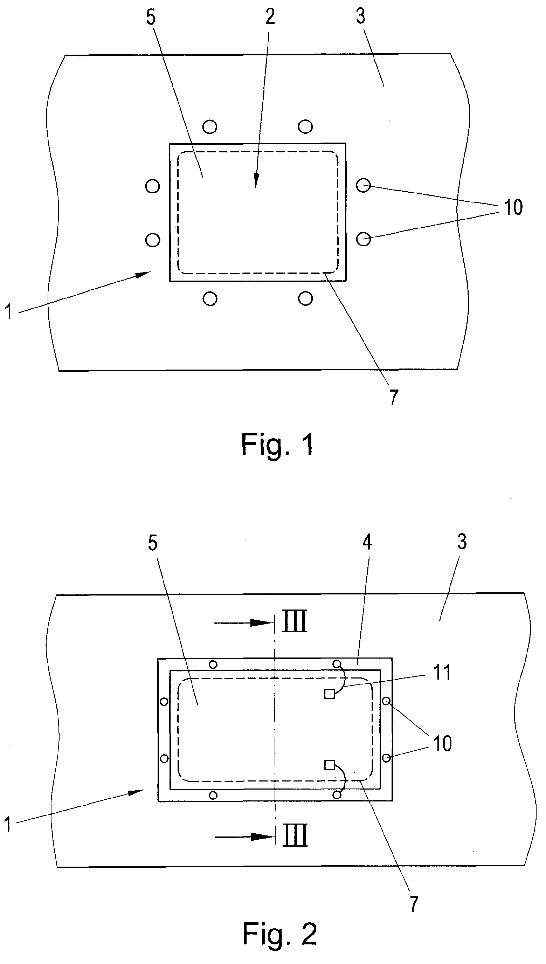

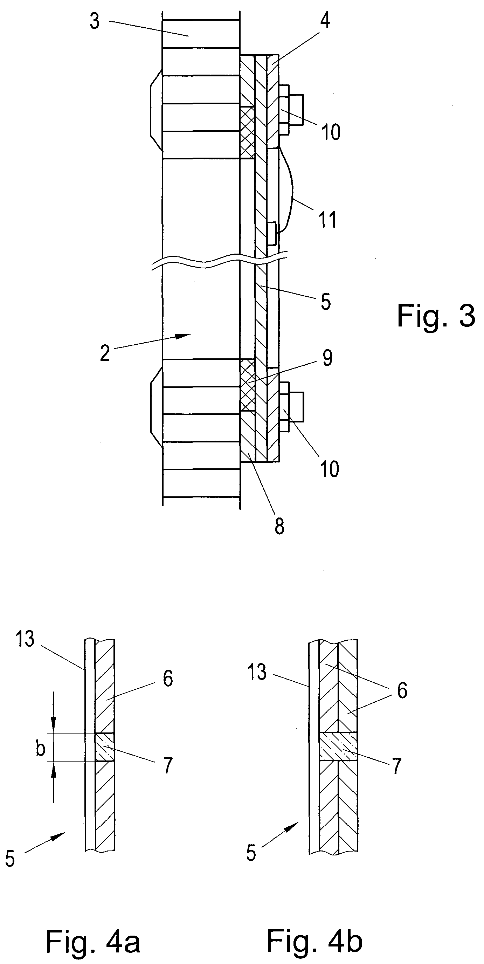

Figur 1 zeigt eine Ansicht auf eine Dekompressionseinheit 1 in einer Dekompressionsöffnung 2 eines Wandelements 3 in einem Luftfahrzeug. Dementsprechend wird die Dekompressionsöffnung 2 im Wandelement 3 durch ein Paneel 5 abgedeckt, welches Paneel 5 durch zumindest eine ausgehärtete Prepreglage 6 mit zumindest einer durch ausgehärtetes Harz ausgefüllten Trennfuge 7 als Sollbruchstelle gebildet ist (siehe Figur 4a und 4b). Durch die Trennfuge 7 im Paneel 5 wird gewährleistet dass die Fasern der Prepreglage, insbesondere die Glasfasern, durchtrennt sind und somit eine Sollbruchstelle gebildet wird, die lediglich durch ausgehärtetes Harz ausgefüllt wird. Im Falle der Überschreitung des vorgegeben Differenzdrucks Δp wird das spröde Harz in der Trennfuge 7 gebrochen und das Paneel 5 aus der Dekompressionsöffnung 2 bewegt, wodurch ein Druckausgleich zwischen den beiden Seiten des Wandelements 3 stattfinden kann.

Figur 2 zeigt eine Rückansicht der Dekompressionseinheit 1 gemäß Figur 1. Dabei ist das Paneel 5 über einen Rahmen 4 mit dem Wandelement 3 verbunden. Zur Verbindung dienen beispielsweise entsprechende Verbindungselemente 10, die durch Schrauben, Bolzen oder dergl. gebildet werden können. Bei einer durchgehenden, in sich geschlossen Trennfuge 7 würde im Dekompressionsfall das Paneel 5 vollständig aus der Dekompressionsöffnung 2 bewegt werden. Um das Paneel 5 im Auslösefall entsprechend zu sichern, können Sicherungselemente 11 vorgesehen sein. Diese Sicherungselemente 11 können beispielsweise durch Seile gebildet sein, die zwischen den Verbindungselementen 10 am Rahmen 4 und dem Paneel 5 befestigt sind.

Das Schnittbild gemäß Figur 3 zeigt das Wandelement 3 und das Paneel 5, welches im dargestellten Beispiel über einen Streifen 8 aus elastischem Material, insbesondere Schaumstoff, im Wandelement 3 angeordnet ist. Darüber hinaus kann auch ein Brandschutzstreifen 9 aus flammhemmendem Material angeordnet sein, um die erforderlichen Brandschutzbestimmungen und Rauchdichtheit gewährleisten zu können.

Die Figuren 4a und 4b zeigen zwei Ausführungsformen eines Paneels 5 zur Bildung der erfindungsgemäßen Dekompressionseinheit 1. Im Ausführungsbeispiel gemäß Figur 4a besteht das Paneel 5 aus einer Prepreglage 6 mit der Trennfuge 7, die durch Harz gefüllt ist. An einer Seite der Prepreglage 6 des Paneels 5 ist eine Kunststofffolie 13, insbesondere eine Polyvinylfluoridfolie, angeordnet. Diese Kunststofffolie 13 kann als Trägermaterial verwendet werden und verleiht dem Paneel 5 eine entsprechende Optik. Die Breite b der Trennfuge 7 wird entsprechend dem Herstellungsverfahren der Trennfuge 7 gewählt und liegt vorzugsweise zwischen 0,1 und 0,8 mm.

Wenn statt einer Prepreglage zwei oder mehr Prepreglagen 6 entsprechend der Figur 4b zum Aufbau des Paneels 5 verwendet werden, wird die Trennfuge 7 entsprechend höher, was sich auf das Ansprechverhalten der Dekompressionseinheit 1 auswirkt. Somit kann durch Anordnung mehrerer Prepreglagen 6 übereinander die Druckdifferenz Δp zur Auslösung des Dekompressionspaneels entsprechend eingestellt werden. Durch Anordnung mehrerer Prepreglagen 6 wird somit sichergestellt, dass die Dekompressionsheinheit 1 nicht bei zu niedrigen Druckdifferenzen Δp auslöst.

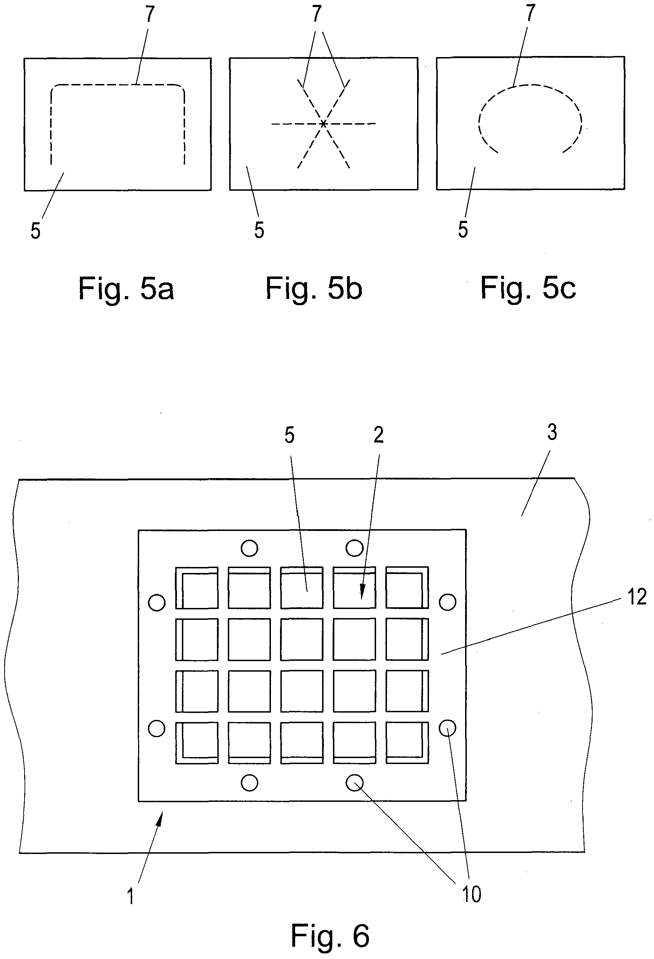

Figuren 5a bis 5c zeigen verschiedene Anordnungsmöglichkeiten (die nicht Teil der Erfindung sind) einer Trennfuge 7. Bei der Ausführungsvariante gemäß Figur 5a wird die Trennfuge über drei Seiten eines Rechteckes angeordnet, wodurch das Paneel 5 im Dekompressionsfall aufgeklappt wird. Bei der Ausführungsvariante gemäß Figur 5b sind drei Trennfugen 7 sternförmig angeordnet, wohingegen bei der Figur 5c die Trennfuge 7 in Form eines Kreis- bzw. Ellipsensektors angeordnet ist. Die jeweilige Gestalt der Trennfuge 7 kann an die jeweiligen räumlichen Bedingungen einfach angepasst werden.

Schließlich zeigt Figur 6 eine Ansicht auf eine Dekompressiosneinheit 1, wobei ein Schutzgitter 12 über der Dekompressionsöffnung 2 angeordnet ist, welches ein ungewolltes Trennen der Trennfuge 7 des Paneels 5 durch mechanische Einwirkung verhindert. Das Schutzgitter 12 ist vorzugsweise ebenfalls durch zumindest eine Prepreglage gebildet. Alternativ dazu sind natürlich auch Ausführungsvarianten aus Metallstäben oder Kunststoffstäben denkbar.

## Patentansprüche

1. Dekompressionseinheit (1) für den Einsatz in einer Dekompressionsöffnung (2) eines Wandelements (3) eines Luftfahrzeugs, mit einem über einen Rahmen (4) in bzw. über der Dekompressionsöffnung (2) befestigbaren Paneel (5), welches Paneel (5) bei einem vorgegebenen Differenzdruck (Δp) zur Freigabe der Dekompressionsöffnung (2) aus dem Rahmen (4) bewegbar ist, wobei das Paneel (5) durch zumindest eine ausgehärtete Prepreglage (6) mit zumindest einer durch ausgehärtetes Harz ausgefüllten Trennfuge (7) als Sollbruchstelle gebildet ist, welche Trennfuge (7) bei Überschreitung des vorgegebenen Differenzdrucks (Δp) bricht, **dadurch gekennzeichnet, dass** die Trennfuge (7) durchgehend, in sich geschlossen ist, und dass an der, dem Wandelement (3) zugewandten Seite des Paneels (5) ein Brandschutzstreifen (9) aus flammhemmendem Material angeordnet ist.

2. Dekompressionseinheit (1) nach Anspruch 1, **dadurch gekennzeichnet, dass** an zumindest einer Seite der zumindest einen Prepreglage (6) eine Kunststofffolie (13), insbesondere eine Polyvinylfluoridfolie, angeordnet ist.

3. Dekompressionseinheit (1) nach Anspruch 1 oder 2, **dadurch gekennzeichnet, dass** an der, dem Wandelement (3) zugewandten Seite des Paneels (5) ein Streifen (8) aus elastischem Material, insbesondere Schaumstoff, angeordnet ist.

4. Dekompressionseinheit (1) nach einem der Ansprüche 1 bis 3, **dadurch gekennzeichnet, dass** am Rahmen (4) Elemente (10) zur Verbindung mit dem Wandelement (3) vorgesehen sind.

5. Dekompressionseinheit (1) nach Anspruch 4, **dadurch gekennzeichnet, dass** die Verbindungselemente (10) durch Schrauben, Bolzen oder dergl. gebildet sind.

6. Dekompressionseinheit (1) nach einem der Ansprüche 1 bis 5, **dadurch gekennzeichnet, dass** der Rahmen (4) mit dem Wandelement (3) verklebt ist.

7. Dekompressionseinheit (1) nach einem der Ansprüche 1 bis 6, **dadurch gekennzeichnet, dass** zumindest ein Element (11) zur Sicherung des im Falle einer Überschreitung der vorgegebenen Druckdifferenz (Δp) aus der Dekompressionsöffnung (2) gedrückten Teiles des Paneels (5) innerhalb der Trennfuge (7) vorgesehen ist.

8. Dekompressionseinheit (1) nach Anspruch 7, **dadurch gekennzeichnet, dass** das Sicherungselement (11) durch ein Seil gebildet ist.

9. Dekompressionseinheit (1) nach einem der Ansprüche 1 bis 8, **dadurch gekennzeichnet, dass** an zumindest einer Seite des Paneels (5) ein mit dem Rahmen (4) verbindbares Schutzgitter (12) angeordnet ist.

10. Dekompressionseinheit (1) nach einem der Ansprüche 1 bis 9, **dadurch gekennzeichnet, dass** die Trennfuge (7) eine Breite (b) von 0,1 bis 0,8 mm aufweist.

## Claims

1. A decompression unit (1) for use in a decompression opening (2) of a wall element (3) of an aircraft, having a panel (5), which can be mounted via a frame (4) in or over the decompression opening (2), which panel (5) can be moved out of the frame (4) at a predetermined differential pressure (Δp) in order to open the decompression opening (2), wherein the panel (5) is formed by at least one hardened prepreg layer (6) with at least one separating joint (7), which is filled with cured resin, as a predetermined breaking point, which separating joint (7) breaks when the predetermined differential pressure (Δp) is exceeded, **characterised in that** the separating joint (7) is continuously self-contained and that a fire protection strip (9) made of a flame-retardant material is arranged on the side of the panel (5) facing the wall element (3).

2. The decompression unit (1) according claim 1, **characterised in that** a plastic film (13), in particular a polyvinyl fluoride film, is arranged on at least one side of the at least one prepreg layer (6).

3. The decompression unit (1) according to claim 1 or 2, **characterised in that** a strip (8) of an elastic material, in particular foam, is arranged on the side of the panel (5) facing the wall element (3).

4. The decompression unit (1) according to any one of claims 1 to 3, **characterised in that** elements (10) for connection to the wall element (3) are provided on the frame (4).

5. The decompression unit (1) according to claim 4, **characterised in that** the connecting elements (10) are formed by screws, bolts or the like.

6. The decompression unit (1) according to any one of claims 1 to 5, **characterised in that** the frame (4) is glued to the wall element (3).

7. The decompression unit (1) according to any one of claims 1 to 6, **characterised in that** at least one element (11) is provided within the separating joint (7) for securing the parts of the panel (5) that are being pushed out of the decompression opening (2) in case of the predetermined pressure difference (Δp) being exceeded.

8. The decompression unit (1) according to claim 7, **characterised in that** the securing element (11) is formed by a rope.

9. The decompression unit (1) according to any one of claims 1 to 8, **characterised in that** a protective grid (12), which is connectible to the frame (4), is arranged on at least one side of the panel (5).

10. The decompression unit (1) according to any one of claims 1 to 9, **characterised in that** the separating joint (7) has a width (b) of 0.1 to 0.8 mm.

## Revendications

1. Unité de décompression (1) destiné à une utilisation dans une ouverture de décompression (2) d'un élément de paroi (3) d'un véhicule aérien, avec un panneau (5) pouvant être fixé par l'intermédiaire d'un cadre (4) dans ou au-dessus de l'ouverture de décompression (2), ce panneau (5) étant mobile, lors d'une pression différentielle (Δp) pour la libération de l'ouverture de décompression (2), hors du cadre (4), le panneau (5) étant constitué d'au moins une couche pré-imprégnée (6) avec au moins un joint de séparation (7) rempli d'une résine durcie en tant que point de rupture prédéfini, ce joint de séparation (7) se cassant lors du dépassement de la pression différentielle (Δp) prédéterminée, **caractérisée en ce que** le joint de séparation (7) est traversant et fermé sur lui-même et **en ce que**, sur le côté du panneau (5) orienté vers l'élément de paroi (3), se trouve une bande de protection anti-incendie (9) en matériau ignifugé.

2. Unité de décompression (1) selon la revendication 1, **caractérisée en ce que**, sur au moins un côté de l'au moins une couche pré-imprégnée (6), se trouve au moins un film de matière plastique (13), plus particulièrement un film de polyfluorure de vinyle.

3. Unité de décompression (1) selon la revendication 1 ou 2, **caractérisée en ce que**, sur le côté du panneau (5) orienté vers l'élément de paroi (3), se trouve une bande (8) en matériau élastique, plus particulièrement en mousse.

4. Unité de décompression (1) selon l'une des revendications 1 à 3, **caractérisée en ce que**, sur le cadre (4) sont prévus des éléments (10) pour une liaison avec l'élément de paroi (3).

5. Unité de décompression (1) selon la revendication 4, **caractérisée en ce que** les éléments de liaison (10) sont constitués de vis, de boulons ou autres.

6. Unité de décompression (1) selon l'une des revendications 1 à 5, **caractérisée en ce que** le cadre (4) est collé à l'élément de paroi (3).

7. Unité de décompression (1) selon l'une des revendications 1 à 6, **caractérisée en ce qu'**au moins un élément (11) de sécurisation de la partie du panneau (5) comprimée hors de l'ouverture de décompression (2) dans le cas d'un dépassement de la dififérence de pression (Δp), est prévu à l'intérieur du joint de séparation (7).

8. Unité de décompression (1) selon la revendication 7, **caractérisée en ce que** l'élément de sécurisation (11) est constitué d'un câble.

9. Unité de décompression (1) selon l'une des revendications 1 à 8, **caractérisée en ce que**, sur au moins un côté du panneau (5) se trouve une grille de protection (12) pouvant être reliée avec le cadre (4).

10. Unité de décompression (1) selon l'une des revendications 1 à 9, **caractérisée en ce que** le joint de séparation (7) présente une largeur (b) de 0,1 mm à 0,8 mm.
